(19) Europäisches Patentamt
European Patent Office
Office européen des brevets

(11) EP 4 257 960 A1

(12) EUROPEAN PATENT APPLICATION

(43) Date of publication:
11.10.2023 Bulletin 2023/41

(21) Application number: 22166924.5

(22) Date of filing: 06.04.2022

(51) International Patent Classification (IPC):
$G01N\ 21/958^{(2006.01)}$   $B22F\ 10/28^{(2021.01)}$
$B22F\ 10/36^{(2021.01)}$   $B22F\ 10/366^{(2021.01)}$
$B22F\ 12/44^{(2021.01)}$   $B22F\ 12/45^{(2021.01)}$
$B22F\ 12/90^{(2021.01)}$   $B29C\ 64/153^{(2017.01)}$
$B29C\ 64/268^{(2017.01)}$   $B29C\ 64/277^{(2017.01)}$
$B29C\ 64/393^{(2017.01)}$

(52) Cooperative Patent Classification (CPC):
G01N 21/958; B22F 10/28; B22F 10/85;
B22F 12/42; B22F 12/45; B22F 12/49; B22F 12/90;
B29C 64/264; B29C 64/35; B29C 64/393;
B33Y 30/00; B33Y 40/00; B33Y 50/02;
G01N 2021/8965; G01N 2021/945

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: TRUMPF Additive Manufacturing Italia
S.r.l.
36015 Schio (VI) (IT)

(72) Inventor: Michieli, Niccolo Tomaso
36015 Schio (VI) (IT)

(74) Representative: Trumpf Patentabteilung
Trumpf SE + Co. KG
TH550 Patente und Lizenzen
Johann-Maus-Straße 2
71254 Ditzingen (DE)

(54) **METHOD FOR MONITORING AT LEAST ONE SURFACE OF AN OPTICAL ELEMENT IN AN ADDITIVE MANUFACTURING APPARATUS AND APPARATUS FOR ADDITIVE MANUFACTURING OF AN OBJECT**

(57)    The invention relates to a method for monitoring at least one surface (17) of an optical element (5) in an additive manufacturing apparatus (1), comprising:
- coupling electromagnetic radiation (13) at at least one defined wavelength into the optical element (5) such that the electromagnetic radiation (13) coupled into the optical element (5) is subject to total internal reflection inside the optical element (5);
- observing the at least one surface (17) of the optical element (5) from the outside of the optical element (5) with at least one sensor (15) which is sensitive to the electromagnetic radiation (13) at the at least one defined wavelength, and
- determining a flaw (21) at at least one spatial position of the at least one surface (17) of the optical element (5) on the basis of a spatially resolved signal of the sensor (15), if electromagnetic radiation (13) at the at least one defined wavelength from the surface (17) is detected in the sensor (15).

Fig.1

**Description**

The invention relates to a method for monitoring at least one surface of an optical element in an additive manufacturing apparatus and an apparatus for additive manufacturing of an object.

An apparatus for additive manufacturing of an object, in particular for selective laser sintering or selective laser melting, makes use of an energy beam to solidify a - typically powder - material layer by layer in a locally selective manner in order to produce a three-dimensional object or workpiece. Typically, at least one optical element is used to transmit, direct, shape or focus the energy beam onto a working area, or to shield a beam generating or steering mechanism from smoke, dust or particles stemming from the working process in the working area. Interaction of a high-power energy beam with any kind of flaw, be it a contaminant, dirt, deposit, dust particles, or surface defects, can negatively affect the quality of the manufacturing process, in particular by causing focus shifts, reduction of available power at the process site due to scattering, or, in the worst case, damage to the optical element itself. For an operator of the apparatus, it is difficult to decide when and how to clean or replace such an optical element, and it is even more difficult to evaluate the cleaning process.

From JP 2017-196629 A it is known that light may be coupled into a protective glass of a laser processing head from a first side such that the light is subject to total internal reflection inside the protective glass, wherein a light detector is arranged on a second, opposite side of the protective glass to detect the light coming from the first side, and an intensity of the detected light is monitored. Thus, flaws on the surface of the protective glass can be detected by observing a reduction in the detected intensity due to scattering of the light at the flaws. However, this method lacks sensitivity and is not able to give the operator an intuitive indication when and in particular in which locations to clean the protective glass.

It is therefore an object of the invention to provide a method for monitoring at least one surface of an optical element in an additive manufacturing apparatus and an apparatus for additive manufacturing of an object which at least in part overcome the drawbacks identified above.

This object is achieved by providing the present technical teachings, in particular the teachings of the independent claims as well as the teachings of the dependent claims and the preferred embodiments disclosed in the description.

According to a first aspect, the object is in particular achieved by providing a method for monitoring at least one surface of an optical element in an additive manufacturing apparatus, comprising: coupling electromagnetic radiation at at least one defined wavelength into the optical element such that the electromagnetic radiation coupled into the optical element is subject to total internal reflection inside the optical element; observing the at least one surface of the optical element from the outside of the optical element with at least one sensor which is sensitive to the electromagnetic radiation at the at least one defined wavelength, and determining a flaw at at least one spatial position of the at least one surface of the optical element on the basis of a spatially resolved signal of the sensor, if electromagnetic radiation at the at least one defined wavelength from the surface is detected in the sensor. Due to observing the optical element from the outside, the inventive method has a very high sensitivity and is able to detect even small flaws, because in contrast to the known method, instead of a small reduction of an otherwise high intensity, a distinctive signal is detected when electromagnetic radiation is scattered to the outside of the optical element by an even small flaw where otherwise only noise is present. If there is no flaw at all on the surface, the electromagnetic radiation is totally reflected internally inside the optical element, and thus only noise is present at the sensor's site outside the optical element. Only when a flaw is present, the light is scattered at the location of the flaw and thus can leave the optical element towards the sensor. Further, by using the spatially resolved signal of the sensor, it is possible to assign a particular spatial position to the flaw, such that an intuitive information can be given to the operator, not only when but also where to clean the optical element.

In the context of the present technical teaching, a flaw is understood to mean in particular an optical inhomogeneity, debris, dirt, a deposit, a contaminant, a dust particle, a surface defect, and/or an anomaly on or at the surface of the optical element.

In the context of the present technical, that the flaw is determined at at least one spatial position of the at least one surface of the optical element is understood to mean in particular that the flaw is determined in a spatially resolved manner on or at the surface.

In particular, the method may be carried out in an apparatus for additive manufacturing of an object in at least one of the following modes or at the respective times: off-line, independent from any manufacturing job, before starting a manufacturing job, during a manufacturing job, after finishing a manufacturing job, after unpacking the apparatus or the optical element, when cleaning of the optical element is due according to a predefined schedule, during the cleaning of the optical element, in particular live or in real time, during maintenance of the apparatus or the optical element, in particular according to a predefined schedule, and after a final test of the apparatus or the optical element before shipping.

In an embodiment, the method is carried out during a manufacturing job, and the method further includes monitoring the presence or appearance or influence of possible flaws, in particular either material layer by material layer, or for at least one predefined material layer, or at at least one predefined time, in particular at predefined time intervals.

Advantageously, it is possible to correlate the presence of a flaw with a melted region of the material from which the additively manufactured object is obtained. In an embodiment, the method may further include reporting, during manufacturing or at the end of the manufacturing process, at least one position where a defect may possibly have occurred due to a detected flaw. Additionally, or in the alternative, the method may include certifying at the end of the manufacturing process that no flaw was detected, if this is the case.

Alternatively, or in addition, the method may comprise recording or storing spatial information of a detected flaw, in particular at determined stages of a manufacturing job. Further, the method may comprise further evaluating the recorded or stored information.

The sensor may observe the at least one surface directly or through any optics, in particular mirrors.

In particular, the wavelength or wavelength range of the electromagnetic radiation is chosen such that it does not overlap with the radiation of the energy beam used for manufacturing the object. This allows for a clear separation between the light used for flaw detection on the one hand and the radiation of the energy beam used for manufacturing the object on the other hand, such that the method has a particular high sensitivity.

In an embodiment, visible light is used as the electromagnetic radiation, in particular when the radiation of the energy beam is in the IR region. In particular, blue or white light is used as the electromagnetic radiation. In particular, blue light may be used when the radiation of the energy beam is green.

In an embodiment, the electromagnetic radiation is coupled directly into the optical element. This allows for a particular straightforward and simple as well as cost-effective coupling of the electromagnetic radiation.

In the alternative, the electromagnetic radiation is coupled via a coupling device into the optical element. In this case, the electromagnetic radiation is coupled into the optical element in a particular efficient and defined way. In particular, a prism or fibre optics may be used as a coupling device.

In an embodiment, the electromagnetic radiation is coupled into the optical element via a circumferential edge of the optical element. This is particularly advantageous with respect to avoiding reflection of the electromagnetic radiation at the surface outside of the optical element, and, at the same time, effectively coupling the electromagnetic radiation such that it undergoes total internal reflection inside the optical element.

In particular, the circumferential edge of the optical element is perpendicular to its optical surfaces transmitting the energy beam, in particular perpendicular to the at least one surface. In this case, it is possible to write a simple condition on the refractive index $n_g$ of the material of the optical element and the refractive index $n_a$ of the surrounding environment, so that all the electromagnetic radiation that enters the optical element through the circumferential edge is totally reflected at the optical surfaces of the optical element. The condition is that the critical angle $\theta_e$ at the circumferential edge and the critical angle $\theta_o$ at the optical surfaces fulfil the following equation:

$$\theta_e + \theta_o < \frac{\pi}{2} . \qquad (1)$$

Since $\theta_e$ and $\theta_o$ both depend only on the refractive index $n_g$ of the optical element and the refractive index $n_a$ of the surrounding environment through the following formula:

$$\theta_e = \theta_o = \sin^{-1}\left(\frac{n_a}{n_g}\right), \qquad (2)$$

equation (1) is fulfilled when

$$\theta_e + \theta_o = 2\sin^{-1}\left(\frac{n_a}{n_g}\right) < \frac{\pi}{2}, \qquad (3)$$

which - given that $n_g \geq n_a$ - can be rewritten as

$$\frac{n_a}{n_g} < \sin\left(\frac{\pi}{4}\right) = \frac{\sqrt{2}}{2} . \qquad (4)$$

If the environment is vacuum, air or otherwise a gas, for which $n_a \approx 1$, thus the previous relation (4) can be simplified to:

$$n_g > \sqrt{2} \approx 1.414. \hspace{3cm} (5)$$

If the optical element is made of fused glass or fused silica, whose refractive index $n_g$ in the visible range is always larger than 1.45, the condition (5) is fulfilled.

In an embodiment, electromagnetic radiation of a predefined bandwidth is used as the electromagnetic radiation. This allows for a defined filtering of the electromagnetic radiation, in particular in front of the sensor, such that the method has a particular high sensitivity. Preferably, the at least one wavelength or predefined bandwidth is chosen in a distance on the wavelength scale to wavelengths which are typically present inside the apparatus, in particular during manufacturing of an object. Thus, the flaw detection mechanism does not suffer from interference due to other sources of electromagnetic radiation.

In an embodiment, a process to clean or replace the optical element is - in particular automatically - initiated if a flaw is determined. Initiating the process may include displaying a message to the operator on a display screen, emitting a distinctive sound, and/or transmitting a message to the operator via email or any messaging service. Additionally, or in the alternative, initiating the process may include causing the apparatus to automatically clean and/or replace the optical element.

The process to clean or replace the optical element is initiated in particular depending on at least one predefined threshold. Thus, the process can be started in a well-defined manner under well-defined circumstances. In particular, the threshold may be established for the signal of the sensor, such that the process is initiated when the signal transcends the threshold. In particular, a first threshold may be defined for initiating a cleaning process, and a second threshold may be defined for initiating a replacing process.

In an embodiment, loci where a flaw is determined on the at least one surface are automatically highlighted in a still image of the surface. Advantageously, this gives the operator a precise and intuitive hint where to clean the optical element.

Additionally, or in the alternative, the loci are automatically highlighted in a video image of the surface. In particular, this advantageously allows for real-time monitoring and evaluating of the cleaning process.

In an embodiment, a cleaning process for cleaning the optical element is - in particular automatically - monitored on the basis of the spatially resolved signal of the sensor. Advantageously, this allows for advising the operator where to intensify or repeat, or when to end cleaning, in particular avoiding overcleaning and thus deteriorating or damaging the optical element. In particular, the cleaning process is evaluated on the basis of the spatially resolved signal of the sensor, allowing to assess the quality of the cleaning process.

During cleaning, the operator may use his own eye as a further sensor, in particular in order to concentrate the cleaning movements to the appropriate locations, and/or in order to evaluate the progress of the cleaning process.

In an embodiment, the method further comprises determining whether a detected flaw interferes with a manufacturing process for a predefined object. In particular, the method comprises further, if it is determined that the detected flaw interferes with the process, determining in which region or location of the working area the interference will take place. In particular, the method further comprises informing an operator about at least one of: the fact that a detected flaw interferes with the manufacturing process, and the region or location where the interference will take place.

In addition, or alternatively, the method includes taking - in particular for the region or location where the interference will take place - at least one step in order to avoid that the detected flaw will indeed interfere with the manufacturing process. In particular, the at least one step is selected from a group consisting of changing at least one manufacturing parameter, in particular a scanning speed of the energy beam, a power of the energy beam, a scanning or hatching scheme, and, when more than one energy beam is used and interference is detected for one of the energy beams, using another energy beam which does not interfere with the detected flaw.

In a second aspect, the object is in particular achieved by providing an apparatus for additive manufacturing of an object, comprising at least one optical element adapted and arranged in order to transmit an energy beam of the apparatus, a radiation source, adapted to emit electromagnetic radiation at at least one predefined wavelength and arranged to couple the electromagnetic radiation into the optical element such that the electromagnetic radiation is subject to total internal reflection inside the optical element, a sensor, adapted to detect the electromagnetic radiation at the at least one predefined wavelength, wherein the sensor is arranged to observe a surface of the optical element, and a control device, connected to the sensor and adapted to determine a flaw at at least one spatial position - i.e. spatially resolved - of the at least one surface of the optical element on the basis of a spatially resolved signal of the sensor, if electromagnetic radiation at the at least one defined wavelength from the surface is detected in the sensor. With respect to the apparatus, in particular the same advantages are achieved as explained above in relation to the method.

In particular, the apparatus comprises means for carrying out a method according to the invention or according to at least one of the embodiments as disclosed above.

In particular, the at least one surface faces a work space, in particular a working area, of the apparatus.

The sensor may be arranged within the work space of the apparatus, or outside the work space, in particular on a side of the optical element facing a source of the energy beam. In particular, the work space is a preferably closed or closable working chamber comprising the working area. In an embodiment, the sensor may be arranged in a space together with scanning optics for manipulating the optical beam, in particular in an optical box.

The apparatus may have more than one sensor. In particular, it is possible that the apparatus has a first sensor arranged within the work space, and a second sensor arranged outside the work space, in particular on an opposite side of the optical element as compared with the first sensor. In particular, the second sensor may be arranged in the optical box.

In an embodiment, the apparatus is adapted for selective laser melting (SLM) or laser metal fusion (LMF). In particular, the energy beam is a laser beam.

The apparatus may have more than one energy beam, in particular more than one laser beam.

The optical element may be a component that the electromagnetic radiation can cross without modification, pass through changing its shape and/or divergence, be completely reflected by the at least one surface, or be partially transmitted and partially reflected. In particular, the at least one surface is an optical surface of the optical element, which in particular means that the surface comes into contact with the energy beam.

In an embodiment, the optical element is selected from a group, consisting of a lens, an objective, a mirror, a beam splitter, a protective glass, and a window. In particular, the optical element has a circumferential edge, which is preferably polished in order to facilitate coupling of the electromagnetic radiation. In particular, the optical element has a screen or shielding element arranged or mounted on or next to the circumferential edge for limiting a coupling angle of the electromagnetic radiation. In particular, the refractive index of the optical element is larger than that of an environment around the optical element.

In particular, the optical element is a protective glass separating a beam generating or steering mechanism from the work space, in particular the working chamber.

In particular, the energy beam is generated by a first laser having a first wavelength.

In an embodiment, the radiation source is selected from a group, consisting of a laser, in particular a second laser having a second wavelength different from the first wavelength, a light-emitting diode, in particular a plurality of light-emitting diodes, in particular a LED strip encompassing the optical element, and a lamp.

In particular, the second laser has a second output light power, lower than a first output light power of the first laser.

In particular, the plurality of light-emitting diodes or LED strip encompass the circumferential edge of the optical element, preferably completely along a closed circumferential line. This ensures a homogeneous illumination and circular symmetry of the electromagnetic radiation inside the optical element.

In an embodiment, the radiation source is integrated into a mounting flange of the optical element. In particular, the mounting flange has sliding contacts as a feedthrough for making electrical contact to the radiation source. In the alternative, the mounting flange has rigid connectors.

The intensity of the electromagnetic radiation should be sufficiently high so that a minimum detectable signal is lower than a predefined threshold. The electromagnetic radiation may be directed towards the optical element or a coupling device in the proper way to allow for confinement and that a possibly non-confined portion does not disturb the sensor background. Preferably, a spectral distribution of the electromagnetic radiation is compatible with the sensor. If the at least one wavelength of the electromagnetic radiation is within a spectral region for which the working chamber is dark, this greatly enhances the purity of background. Proper filters may be used in front of the sensor to cut all other wavelengths. Preferably, the radiation source may be integrable in the machine. It can be adj acent to the coupling device or the optical element, or farther apart, and in this case an optical path - either by optical fibre or free space propagation - is created to route the electromagnetic radiation.

In particular, the sensor is selected from a group, consisting of a generic camera, a process monitoring camera of the apparatus, a dedicated flaw detection camera - in particular in addition to a process monitoring camera, and a web cam. While a generic camera and a web cam are particularly cheap implementations of the sensor, detecting flaws with a process monitoring camera, which is adapted to monitor a manufacturing process of the apparatus, conveniently makes use of a device typically already implemented in the apparatus, such that no additional sensor is needed and the apparatus is efficient and small. A dedicated flaw detection camera may be specifically adapted to the needs of the flaw detection mechanism and thus provide a particularly sensitive implementation. The sensor may be integrated in a wall of the apparatus, in particular a wall of the working chamber.

In an embodiment, the apparatus further comprises a coupling device, adapted and arranged to couple the electromagnetic radiation into the optical element. In particular, the coupling device is selected from a group, consisting of a fibre optic, a waveguide, and a prism.

In an embodiment, a filter is arranged in front of the sensor, the filter being adapted to the electromagnetic radiation at the at least one predefined wavelength and/or polarization state, such that the filter transmits, at least to a larger extent, in particular exclusively, the electromagnetic radiation at the at least one predefined wavelength and/or polarization state, and blocks, at least to a predefined extent, in particular completely, electromagnetic radiation at other wavelengths and/or other polarization states. Thus, the method may have a particular high sensitivity.

Alternatively, or additionally, an interacting element may be inserted between the radiation source and the optical element to control and/or modify the optical properties of the electromagnetic radiation that is coupled to the optical element. In particular, this interacting element may be selected from: a spectral filter, a polarizer, a waveplate, a retarder, a lens, or a combination of these elements.

In another embodiment, the apparatus may comprise a display device or display screen for displaying a still image or - in particular live or real-time - video of detected flaw loci. Preferably, the control device is connected to the display device or display screen and adapted to display the still image or video.

Additionally, or in the alternative, the control device may be adapted to monitor, in particular evaluate a cleaning process of the optical element. In particular, the control device may be adapted to give feedback to an operator with respect to the cleaning process.

In an embodiment, the control device may be adapted to monitor the presence or appearance or influence of possible flaws during a manufacturing job, in particular either material layer by material layer, or for at least one predefined material layer, or at at least one predefined time, in particular at predefined time intervals. Preferably, the control device is adapted to correlate the presence of a flaw with a melted region of the material from which the additively manufactured object is obtained. In an embodiment, the control device is further adapted to report, during manufacturing or at the end of the manufacturing process, at least one position where a defect may possibly have occurred due to a detected flaw. Additionally, or in the alternative, the control device is adapted to certify at the end of the manufacturing process that no flaw was detected, if this is the case.

Alternatively, or in addition, the control device is adapted to record or store spatial information of a detected flaw, in particular at determined stages of a manufacturing job. Further, the control device may be adapted to further evaluate the recorded or stored information.

Alternatively, or in addition, the control device is adapted to determine whether a detected flaw interferes with a manufacturing process for a predefined object. In particular, the control device is further adapted to determine, if it is determined that the detected flaw interferes with the process, in which region or location of the working area the interference will take place. In particular, the control device is adapted to inform an operator about at least one of: the fact that a detected flaw interferes with the manufacturing process, and the region or location where the interference will take place.

In addition, or alternatively, the control device is adapted to take - in particular for the region or location where the interference will take place - at least one step in order to avoid that the detected flaw will indeed interfere with the manufacturing process. In particular, the at least one step is selected from a group consisting of changing at least one manufacturing parameter, in particular a scanning speed of the energy beam, a power of the energy beam, a scanning or hatching scheme, and, when more than one energy beam is used and interference is detected for one of the energy beams, using another energy beam which does not interfere with the detected flaw.

In an embodiment, the apparatus may be adapted to automatically replace and/or clean the window depending on the signal of the sensor.

The invention is explained below in further detail with reference the drawing. In the drawing

Figure 1    shows first and second embodiments of an apparatus for additive manufacturing of an obj ect;

Figure 2    shows a detail of a third embodiment of the apparatus;

Figure 3    shows a detail of a fourth embodiment of the apparatus, and

Figure 4    shows a fifth embodiment of the apparatus.

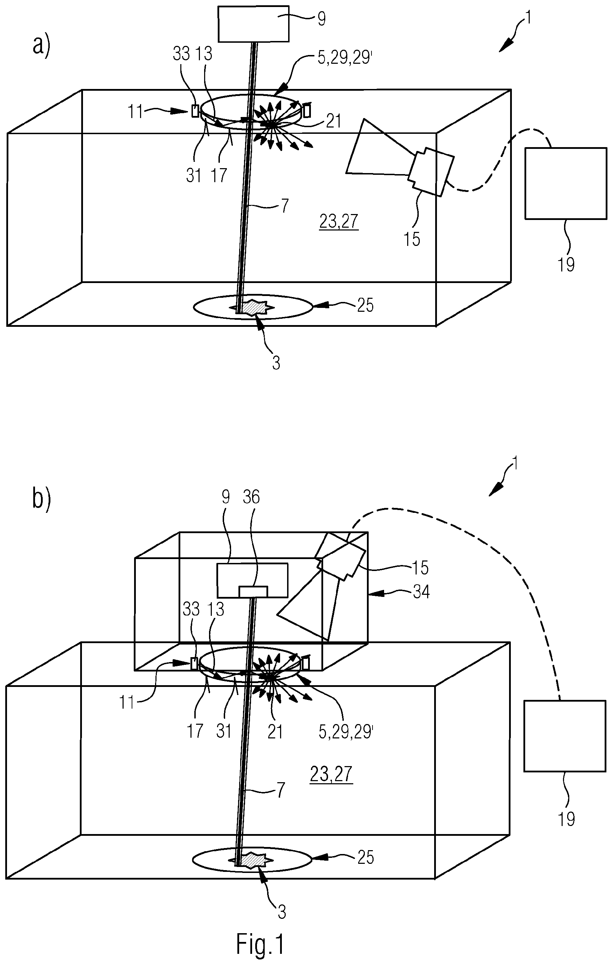

**Fig. 1** schematically shows first and second embodiments of an apparatus 1 for additive manufacturing of an object 3.

The apparatus 1 comprises an optical element 5 adapted and arranged in order to transmit an energy beam 7 generated by a beam generator 9, preferably a laser beam generated by a laser, and a radiation source 11, adapted to emit electromagnetic radiation 13 at at least one predefined wavelength, preferably visible light, in particular blue or white light. The radiation source 11 is arranged to couple the electromagnetic radiation 13 into the optical element 5 such that the electromagnetic radiation 13 is subject to total internal reflection inside the optical element 5.

The apparatus 1 further comprises a sensor 15, adapted to detect the electromagnetic radiation 13 at the at least one predefined wavelength, wherein the sensor 15 is arranged to observe a surface 17 of the optical element 5. The apparatus 1 further comprises a control device 19, connected to the sensor 15 and adapted to determine a flaw 21 at at least one spatial position - i.e. spatially resolved - of the at least one surface 17 of the optical element 5 on the basis of a spatially resolved signal of the sensor 15, if the electromagnetic radiation 13 is partially scattered from the flaw 21 at the surface 17 and detected in the sensor 15.

Due to observing the optical element 5 from the outside, a very high sensitivity is achieved and even small flaws 21 can be detected. Further, by using the spatially resolved signal of the sensor 15, it is possible to assign a particular spatial position to the flaw 21, such that an intuitive information can be given to an operator of the apparatus 1, when and where to clean the optical element 5, or the optical element 5 may be automatically cleaned and/or replaced by the apparatus 1.

The at least one surface faces a work space 23, in particular a working area 25, of the apparatus 1. In the first embodiment shown at a), the sensor 15 is arranged within the work space 23 of the apparatus 1. In particular, the work space 23 is a preferably closed or closable working chamber 27 comprising the working area 25.

Preferably, the apparatus 1 is adapted for selective laser melting (SLM) or laser metal fusion (LMF).

The optical element 5 preferably is embodied as a lens, an objective, a mirror, a beam splitter, a protective glass, or a window. In the first embodiment shown in figure 1, the optical element 5 is both a protective glass 29 and a window 29' transmitting the energy beam 7 into the working chamber 27.

In particular, the optical element 5 has a circumferential edge 31, which is preferably polished in order to facilitate coupling of the electromagnetic radiation 13.

The radiation source 11 preferably is a laser, a light-emitting diode, in particular a plurality of light-emitting diodes, in particular a LED strip encompassing the optical element 5, or a lamp. In the first embodiment of figure 1, the radiation source 11 is a plurality of light-emitting diodes 33, in particular a LED strip encompassing the optical element 5. In particular, the plurality of light-emitting diodes 33 - or the LED strip - encompass the circumferential edge 31 of the optical element 5, preferably along a closed circumferential line.

The sensor 15 preferably is a generic camera, a process monitoring camera of the apparatus, a dedicated flaw detection camera - in particular in addition to a process monitoring camera, or a web cam.

Preferably, the apparatus 1 is adapted to carry out a method for monitoring the surface 17, the method comprising: the electromagnetic radiation 13 is coupled into the optical element 5 such that the electromagnetic radiation 13 is subject to total internal reflection inside the optical element 5; the surface 17 of the optical element 5 is observed from the outside of the optical element 5 by the sensor 15, and the control device 19 determines a flaw 21 in a spatially resolved manner at the surface 17 on the basis of the spatially resolved signal of the sensor 15, if the electromagnetic radiation 13 is scattered by the flaw 21 from the surface 17 into the sensor 5.

In the first embodiment of figure 1, the electromagnetic radiation 13 is coupled directly into the optical element 5. Preferably, the electromagnetic radiation 13 is coupled into the optical element 5 via the circumferential edge 31.

Preferably, the control device 19 is adapted to automatically initiate a process to clean or replace the optical element 5 if a flaw 21 is determined. Initiating the process may include displaying a message to the operator on a display screen, emitting a distinctive sound, and/or transmitting a message to the operator via email are any messaging service. Additionally, or in the alternative, initiating the process may include causing the apparatus 1 to automatically clean and/or replace the optical element 5.

Preferably, the control device 19 is adapted to automatically highlight loci where a flaw 21 is determined on the surface 17 in a still image or video of the surface 17.

Preferably, the control device 19 is adapted to automatically monitor or evaluate a cleaning process for cleaning the optical element 5 on the basis of the spatially resolved signal of the sensor 15. In particular, the control device 19 may be adapted to give feedback to an operator with respect to the cleaning process.

At b), a second embodiment of the apparatus 1 is shown, in which the sensor 15 is arranged outside the work space 23. In particular, the sensor 15 is arranged inside an optical box 34, the optical box 34 in particular containing scanning optics 36 for manipulating the optical beam and the sensor 15.

In an embodiment which is not shown here, the apparatus 1 may have two sensors 15, one of which is arranged within the work space 23, and the other one is arranged outside the work space 23, in particular in the optical box 34.

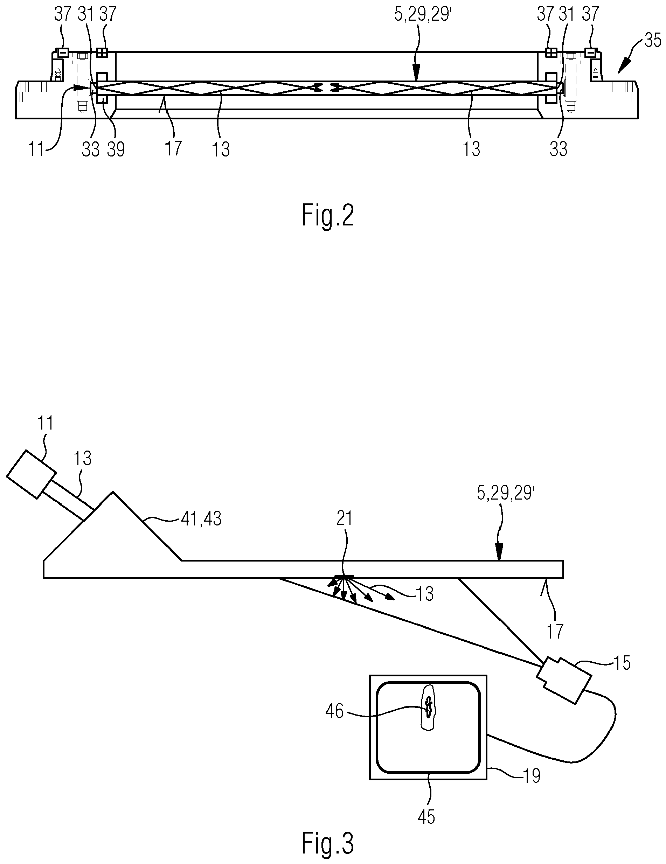

**Fig. 2** shows a detail of a third embodiment of the apparatus 1.

The same or functionally equivalent elements are assigned the same reference numerals in all figures, such that reference is made in each case to the preceding explanations.

In this third embodiment, the radiation source 11 is integrated into a mounting flange 35 of the optical element 5. The mounting flange 35 preferably has sliding contacts 37 - as a feedthrough - for making electrical contact to the radiation source 11.

Preferably, the optical element 5 has a screen 39 arranged or mounted on or next to the circumferential edge 31 for controlling or limiting the coupling angle of the electromagnetic radiation 13.

**Fig. 3** shows a detail of a fourth embodiment of the apparatus 1.

In this fourth embodiment, the apparatus 1 further comprises a coupling device 41, adapted and arranged to couple the electromagnetic radiation 13 into the optical element 5. In particular, the coupling device 41 is a fibre optic, a waveguide, or a prism. In this fourth embodiment, the coupling device 41 is a prism 43.

Preferably, the control device 19 comprises a display screen 45 for displaying a still image or - in particular live or real-time - video of detected flaw loci 46. This, of course, does not exclusively apply to the fourth embodiment shown here, but preferably to all embodiments of the apparatus 1.

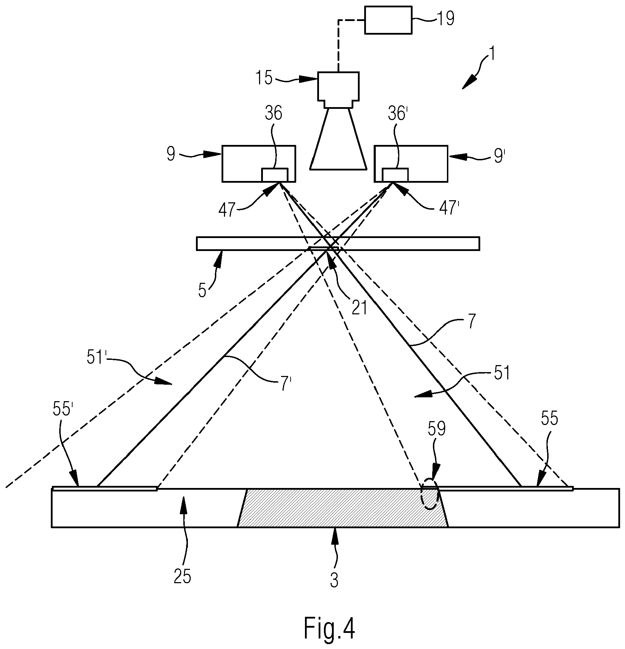

Fig. 4 schematically shows a fifth embodiment of the apparatus 1. In this fifth embodiment, the control device 19 is adapted to determine whether a detected flaw 21 interferes with a manufacturing process for a predefined object 3, and further in which region or location of the working area 25 the interference will take place. The control device 19 is further adapted to assign another energy beam 7, 7', which does not interfere with the detected flaw, to the respective region or location, when more than one energy beam 7, 7' is used and interference is detected for one of the energy beams 7, 7' but not for the other energy beam 7, 7'.

The principle is illustrated for a system comprising two beam generators 9, 9'. In particular, in the fifth embodiment relative positions of the optical element 5, the two beam generators 9, 9' and of the working area 25 are used to derive the region of the working area 25 and of the object 3 that experiences negative effects of the presence of the flaw 21.

To each beam generator 9, 9' a scanning optics 36, 36' is assigned. For each one of the scanning optics 36, 36', a pivot point 47, 47' is defined as the projection centre of the scanning. These pivot points 47, 47', together with the knowledge of the spatial position of the flaw 21 and the relative position of the optical element 5, define two flaw-influenced regions 51, 51' for the two scanning optics 36, 36', respectively. These flaw-influenced regions 51, 51' have the property that if the respective energy beam 7, 7' is within them, then the respective energy beam 7, 7' interacts directly with the flaw 21. By intersecting the flaw-influenced regions 51, 51' with the working area 25, flaw-influenced portions 55, 55' of the working area 25 are derived. If the object 3 overlaps one of the flaw-influenced regions 55, 55' assigned to one of the energy beams 7, 7' during the manufacturing in an overlapping region 59, the quality of the object 3 may be reduced in the overlapping region 59.

In this case, the control device 19 preferably assigns the other energy beam 7', 7, for which no interference with the flaw 21 is determined in this region, to the overlapping region 59.

**Claims**

1. Method for monitoring at least one surface (17) of an optical element (5) in an additive manufacturing apparatus (1), comprising:

   - coupling electromagnetic radiation (13) at at least one defined wavelength into the optical element (5) such that the electromagnetic radiation (13) coupled into the optical element (5) is subject to total internal reflection inside the optical element (5);
   - observing the at least one surface (17) of the optical element (5) from the outside of the optical element (5) with at least one sensor (15) which is sensitive to the electromagnetic radiation (13) at the at least one defined wavelength, and
   - determining a flaw (21) at at least one spatial position of the at least one surface (17) of the optical element (5) on the basis of a spatially resolved signal of the sensor (15), if electromagnetic radiation (13) at the at least one defined wavelength from the surface (17) is detected in the sensor (15).

2. Method according to claim 1, wherein visible light, in particular blue or white light, is used as the electromagnetic radiation (13).

3. Method according to any of the preceding claims, wherein the electromagnetic radiation (13) is coupled directly or via a coupling device (41) into the optical element (5).

4. Method according to any of the preceding claims, wherein the electromagnetic radiation (13) is coupled into the optical element (5) via a circumferential edge (31) of the optical element (5).

5. Method according to any of the preceding claims, wherein a process to clean or replace the optical element (5) is initiated if a flaw (21) is determined, in particular depending on at least one predefined threshold.

6. Method according to any of the preceding claims, wherein loci where a flaw (21) is determined on the at least one surface (17) are automatically highlighted in a still or video image of the surface (17).

7. Method according to any of the preceding claims, wherein a cleaning process for cleaning the optical element (5) is monitored, in particular evaluated, on the basis of the spatially resolved signal of the sensor (15).

8. Apparatus (1) for additive manufacturing of an object (3), comprising

- at least one optical element (5) adapted and arranged in order to transmit an energy beam (7) of the apparatus (1),
- a radiation source (11), adapted to emit electromagnetic radiation (13) at at least one predefined wavelength and arranged to couple the electromagnetic radiation (13) into the optical element (5) such that the electromagnetic radiation (13) is subject to total internal reflection inside the optical element (5),
- a sensor (15), adapted to detect the electromagnetic radiation (13) at the at least one predefined wavelength, wherein
- the sensor (15) is arranged to observe a surface (17) of the optical element (5), and
- a control device (19), connected to the sensor (15) and adapted to determine a flaw (21) at at least one spatial position of the at least one surface (17) of the optical element (5) on the basis of a spatially resolved signal of the sensor (15), if electromagnetic radiation (13) at the at least one defined wavelength from the surface (17) is detected in the sensor (15).

9. Apparatus (1) according to claim 8, wherein the apparatus (1) is adapted for selective laser melting or laser metal fusion.

10. Apparatus (1) according to any of claims 8 or 9, wherein the optical element (5) is selected from a group, consisting of a lens, an objective, a mirror, a beam splitter, a protective glass (29), and a window (29').

11. Apparatus (1) according to any of claims 8 to 10, wherein the radiation source (11) is selected from a group, consisting of a laser, a light-emitting diode (33), in particular a plurality of light-emitting diodes (33), in particular a LED strip encompassing the optical element (5), and a lamp.

12. Apparatus (1) according to any of claims 8 to 11, further comprising a coupling device (41), adapted and arranged to couple the electromagnetic radiation (13) into the coupling element, wherein preferably the coupling device (41) is selected from a group, consisting of a fibre optic, a waveguide, and a prism (43).

a)

33 13

11

5,29,29'

21

31 17

9

7

23,27

15

19

25

3

b)

9 36

33 13

15

34

11

17 31 21

5,29,29'

23,27

19

7

25

3

Fig.1

Fig.2

Fig.3

Fig.4

Europäisches
Patentamt

European
Patent Office

Office européen
des brevets

# EUROPEAN SEARCH REPORT

Application Number

EP 22 16 6924

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 10 2015 202347 A1 (TRUMPF LASER- UND SYSTEMTECHNIK GMBH [DE]) 11 August 2016 (2016-08-11) | 1-5,7-12 | INV. G01N21/958 B22F10/28 |
| A | * figure 4 * * paragraph [0002] * | 6 | B22F10/36 B22F10/366 B22F12/44 |
| Y | DE 20 2017 000356 U1 (IFU DIAGNOSTIC SYSTEMS GMBH [DE]) 3 February 2017 (2017-02-03) | 1-5,7-12 | B22F12/45 B22F12/90 B29C64/153 |
| A | * figure 1 * * paragraphs [0001], [0002] * | 6 | B29C64/268 B29C64/277 B29C64/393 |
| A | DE 203 14 918 U1 (SCANSONIC GMBH [DE]) 3 February 2005 (2005-02-03) * figures 1-5 * * paragraph [0025] – paragraph [0028] * | 1,8 | |
| A | DE 298 16 879 U1 (TRUMPF GMBH & CO [DE]) 26 November 1998 (1998-11-26) * figures 2a-2c * * page 10 – page 13 * | 1,8 | |

TECHNICAL FIELDS
SEARCHED (IPC)

G01N
B23K
C22C
B29C
B22F

The present search report has been drawn up for all claims

| Place of search | Date of completion of the search | Examiner |
|---|---|---|
| Berlin | 23 September 2022 | Meister, Martin |

EP 4 257 960 A1

## ANNEX TO THE EUROPEAN SEARCH REPORT
## ON EUROPEAN PATENT APPLICATION NO.

EP 22 16 6924

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2022

| Patent document cited in search report | Publication date | Patent family member(s) | Publication date |
|---|---|---|---|
| DE 102015202347 A1 | 11-08-2016 | CN 108883499 A | 23-11-2018 |
| | | DE 102015202347 A1 | 11-08-2016 |
| | | EP 3256285 A1 | 20-12-2017 |
| | | US 2018345413 A1 | 06-12-2018 |
| | | WO 2016128430 A1 | 18-08-2016 |
| DE 202017000356 U1 | 03-02-2017 | NONE | |
| DE 20314918 U1 | 03-02-2005 | DE 20314918 U1 | 03-02-2005 |
| | | WO 2005030433 A1 | 07-04-2005 |
| DE 29816879 U1 | 26-11-1998 | AT 238129 T | 15-05-2003 |
| | | DE 29816879 U1 | 26-11-1998 |
| | | EP 0988916 A1 | 29-03-2000 |
| | | JP 4418561 B2 | 17-02-2010 |
| | | JP 2000094166 A | 04-04-2000 |
| | | US 6370171 B1 | 09-04-2002 |

EPO FORM P0459

For more details about this annex : see Official Journal of the European Patent Office, No. 12/82

**EP 4 257 960 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017196629 A